# EUROPEAN PATENT APPLICATION

(11) **EP 0 884 692 A1**
(43) Date of publication of application: **16.12.1998**
(21) Application number: 98304687.1
(22) Date of filing: 11.06.1998
(51) Int. Cl.: G06K 11/18

(54) **Mouse mat**

(30) Priority: 13.06.1997 GB 9712433; 25.07.1997 GB 9715803
(71) Applicant: Listawood Limited, Fakenham, Norfolk NR21 7RF (GB)
(72) Inventor: Allen, Arthur, Fakenham, Norfolk, NR21 7RF (GB)
(74) Representative: BATCHELLOR, KIRK & CO.

(57) **Abstract**

It has been found that people who use a computer mouse a lot risk repetitive strain injury.

In an attempt to alleviate that risk, there is disclosed a mouse mat having a first area of one thickness, said first area having an upper surface for operative contact with a mouse, said mat having a second area of relatively greater thickness along one edge on which to rest a user's wrist.

## Description

This invention relates to mouse mats.

It has been found that people who use a computer mouse a lot risk repetitive strain injury.

In an attempt to alleviate that risk, the invention provides a mouse mat having a first area of one thickness, said first area having an upper surface for operative contact with a mouse, said mat having a second area of relatively greater thickness along one edge on which to rest a user's wrist.

Resting the wrist on the thicker edge is thought to reduce the risk of injury.

Mouse mats are frequently used as promotional gifts. For such use it is desirable that the construction is simple and inexpensive. To this end, the mouse mat preferably comprises a sheet of said one thickness extending over the entire area of the mat and a strip of material bonded to the under surface of the second area so, with the overlying sheet, to provide said relatively greater thickness.

In order to improve both the appearance and the performance of the mat, between said first and second areas there is preferably a transition area wherein the thickness changes gradually. If the change between the two thicknesses is too sudden the mat will not lay flat so readily but lifts in the middle.

The strip of material is preferably bonded to the under surface of the sheet also in the transition area.

Preferably, the strip of material is generally rectangular in cross section, having a bevel to provide the gradual change in thickness.

The mat is preferably constructed of expanded plastics and/or expanded rubber. Most preferably the plastics is ethylene propylene diene monomer or polyvinyl chloride, and the rubber is natural rubber.

In order for the mat to lay flat, the thickness of the first area is preferably approximately 1 to 2 mm.

In order to provide suitable support to the user's wrist the difference between the said one thickness and the relatively greater thickness is approximately 10 to 20 mm.

It would be usual for a mouse user also to use a keyboard. In order to reduce the risk of repetitive strain injury from keyboard use, the second area preferably extends beyond two adjacent edges of the first area so that the mat overall has an L-shape. In use the arm of the L-shape having the second thickness is placed against the keyboard and used as a wrist rest while keyboarding.

In order to facilitate such use, the second area preferably extends beyond one edge of the first area by at least 40 cm, more preferably by at least 45 cm.

Embodiments of the invention will now be described, by way of example, with reference to the accompanying drawing, in which:
Figure 1 is a pictorial view of a mouse mat embodying the invention;
Figure 2 is a side view, to a larger scale, of a portion of an example of the mouse mat of Figure 1;
Figure 3 is a side view of a portion of another example of the mouse mat of Figure 1;
Figure 4 is a perspective view of a mouse mat embodying the invention and incorporating a keyboard wrist rest; and
Figure 5 is a plan view of the mat of Figure 4 in use with a keyboard.

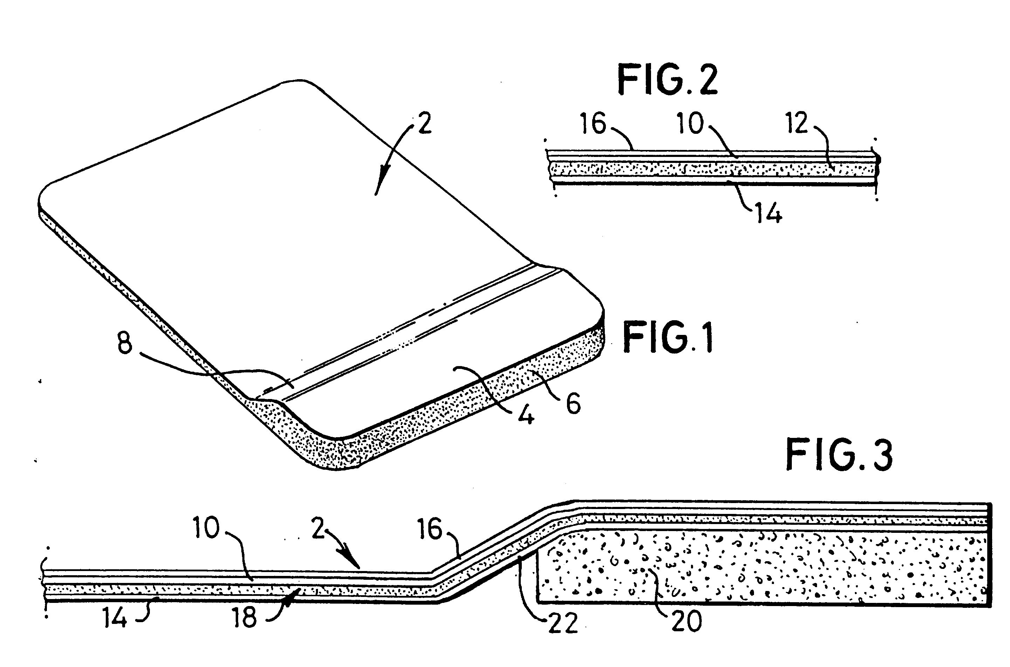

Referring to the drawings, the mouse mat 2 is generally rectangular approximately 20 to 30 cm by 15 to 20 cm, having rounded corners. It has a first area 2 of one thickness normally in the range 1 to 2 mm. A second area 4 along one edge 6 of the mat is of greater thickness, normally in the range 12 to 22 mm, preferably not greater than 17 mm. The mat has an intermediate area where the thickness changes gradually. The gradual change may take place over the whole of the change from that of the first area 2 to that of the second area 4 as shown in Figure 1. The width of the second area 4 is preferably in the range 4 to 7 mm wide, most preferably about 5 mm wide. The intermediate area is preferably in the range 1.5 mm to 3 mm wide, most preferably 2 mm. If the change in thickness is too steep, the first area of the mat will not lie flat so readily.

The mat is made from polyvinyl chloride which is manufactured by poring a non expanded emulsion of polyvinyl chloride onto a surface corresponding to that of the top surface of the mat and having a release coating so as to form a to form a skin 10. The release coated surface has a mat finish to impart a mat finish on the skin 10. The layer is partially cured in an oven and a layer of polyvinyl chloride emulsion is pored onto the skin 10 and oven-cured to form an expanded layer 12 having a skin 14 on what is in use its under surface. The layer contains sufficient plasticiser that when it cures the surface skin 14 is tacky. When the layer has cured the thickness of the sheet is approximately 0.9 to 1.2 mm in the first area 2 and 10 to 20 mm in the second area 4.

An example of the composition by weight of the layer 6 is as follows:

| | | |
|---|---|---|
| Base resin | emulsion polyvinyl chloride | 48-6 |
| | | |
| Plasticisers | esters of phtalic acid with alcohols from C₈ to C₁₂ | 20-4 |
| | | |
| Stabilisers and Kickers | Organic Ba - Zn and /or K-Zn soaps in epoxidised soya-bean oil | <2% |
| | | |
| Fillers | calcium carbonates, silica | 3-20 |
| | | |
| Pigments | organic and/or inorganic pigments | 0.5- |

The quantity of plasticisers is sufficient to provide a tacky surface to the skin 14 of the mat at room temperature. Less plasticiser is provided in the layer 10 so that the surface is not tacky at room temperature but provides a surface which, having a mat finish, presents a high coefficient of friction to the mouse ball. Alternatively the surface may be covered by a clear polyvinyl chloride or polypropylene sheet 16.

An alternative construction is shown in Figure 3. Here a continuous sheet 18 of one thickness is manufactured by the same process as described above but using a flat surface. The sheet may be covered with a clear polyvinyl chloride or polypropylene sheet 16 as in the previous example. A 10 to 15 mm thick strip 20 of expanded plastics or rubber material is then bonded to the underside of the sheet along one edge and the resulting laminate is die cut into mouse mats.

Examples of expanded or foam materials suitable for the strip 20 to be made from are ethylene propylene diene monomer, polyvinyl chloride nitryle, ethylene vinyl acetate, polyethylene, neoprene, polyvinyl chloride, polyurethane, and latex. If the density of the material is correctly chosen it may be cut using, say, a jig saw to produce the bevel 22 which underlies the transition area. Suitable strip material can be obtained with a double sided adhesive tape all ready applied to one side. Cutting the bevel 22 leaves the bevel without adhesive tape. It is preferable, although not essential, to apply double sided adhesive tape to the bevel.

In this form of construction, another suitable material for the continuous sheet 18 is 2 mm thick ethylene propylene diene monomer. This may be covered with a layer of polyester textile, woven or knitted, thin mark resist "rigid" PVC e.g. 225 micron thick, or polypropylene e.g. 275 micron thick.

Another suitable material is 1.6 to 3 mm thick open cell natural rubber sponge which may also be covered with a layer of polyester textile, woven or knitted, thin mark resist "rigid" PVC e.g. 225 micron thick, or polypropylene e.g. 275 micron thick.

Other materials which may be suitable for the continuous sheet are polyethylene or EVA.

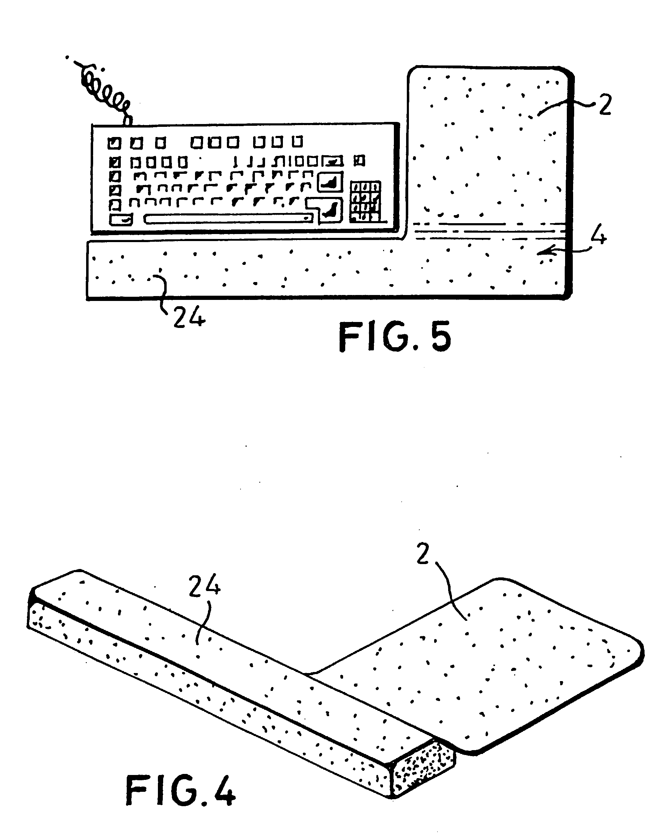

Referring to Figures 4 and 5, the second, thicker, area of the mat is extended in an area 24 so that the overall plan shape of the mat is L-shaped. In use the area 24 is placed against the keyboard 26 as shown in Figure 5 so that the user can use the area 4 as a wrist rest both while using the mouse and when using the keyboard. To accommodate the length of a keyboard for a PC the area 24 preferably extends at least 40 cm, more preferably 45 cm, beyond the edge of the first area 2.

## Claims

1. A mouse mat having a first area of one thickness, said first area having an upper surface for operative contact with a mouse, said mat having a second area of relatively greater thickness along one edge on which to rest a user's wrist.

2. A mouse mat as claimed in claim 1, comprising a sheet of said one thickness extending over the entire area of the mat and a strip of material bonded to the under surface of the second area so, with the overlying sheet, to provide said relatively greater thickness.

3. A mouse mat as claimed in claim 1 or 2, wherein between said first and second areas is a transition area wherein the thickness changes gradually.

4. A mouse mat as claimed in claim 3 when dependent on claim 2, in which the strip of material is bonded to the under surface of the sheet also in the transition area.

5. A mouse mat as claimed in 4, wherein the strip of material is generally rectangular in cross section, having a bevel to provide the gradual change in thickness.

6. A mouse mat as claimed in any preceding claim, constructed of expanded plastics and/or expanded rubber.

7. A mouse mat as claimed in claim 6, wherein the plastics is ethylene propylene diene monomer, or polyvinyl chloride, and the rubber is natural rubber.

8. A mouse mat as claimed in any preceding claim, wherein the thickness of the first area is approximately 1 to 2 mm.

9. A mouse mat as claimed in any preceding claim, wherein difference between the said one thickness and the relatively greater thickness is approximately 10 to 20 mm.

10. A mouse mat as claimed in any preceding claim, wherein the second area extends beyond two adjacent edges of the first area so that the mat overall has an L-shape.

11. A mat as claimed in any preceding claim, wherein the second area extends beyond one edge of the first area by at least 40 cm.

12. A mat as claimed in any preceding claim, wherein the second area extends beyond one edge of the first area by at least 45 cm.
